(19) Europäisches Patentamt
European Patent Office
Office européen des brevets

(11) Veröffentlichungsnummer: **0 076 470**
**A1**

(12) # EUROPÄISCHE PATENTANMELDUNG

(21) Anmeldenummer: 82109039.6

(22) Anmeldetag: 30.09.82

(51) Int. Cl.³: **A 01 N 57/20**
//(A01N57/20, 47/30, 43/70, 57/20, 47/30, 39/04)

(30) Priorität: 01.10.81 DE 3139060

(43) Veröffentlichungstag der Anmeldung: 13.04.83 Patentblatt 83/15

(84) Benannte Vertragsstaaten: AT BE CH DE FR GB IT LI NL SE

(71) Anmelder: HOECHST AKTIENGESELLSCHAFT
Postfach 80 03 20
D-6230 Frankfurt/Main 80(DE)

(72) Erfinder: Langelüddeke, Peter, Dr.
Nelkenweg 5
D-6238 Hofheim am Taunus(DE)

(72) Erfinder: Albrecht, Konrad, Dr.
Sodener Strasse 64
D-6233 Kelkheim (Taunus)(DE)

(72) Erfinder: Heinrich, Rudolf, Dr.
Taunusstrasse 19
D-6233 Kelkheim (Taunus)(DE)

(54) **Herbizide Mittel.**

(57) Gegenstand der Erfindung sind herbizide Mittel, gekennzeichnet durch einen Gehalt an einer Verbindung der Formel I,

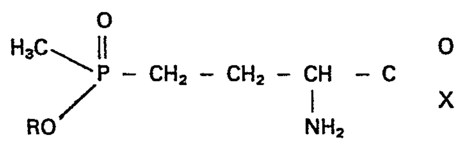

(I)

worin R = H, $NH_4$, Na, K oder 1/2 Ca, und X = OH oder $-NH-CH(CH_3)-CONH-CH(CH_3)-COOH$ bedueten, in Kombination mit einer Verbindung der Formel II, worin

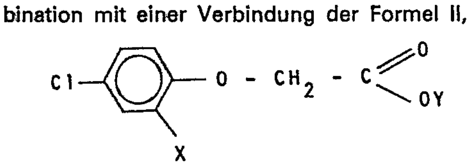

(II)

X = Cl oder $CH_3$ und Y = H, Alkali, gegebenenfalls substituiertes $NH_4$ oder Alkyl bedeuten, und der Verbindung der Formel III

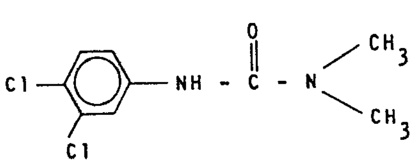

(III)

oder der Verbindung der Formel IV

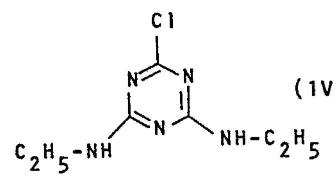

(IV)

Diese zeigen synergistische Wirkung bei der Verwendung zur Unkrautebekämpfung insbesondere in baum- oder strauchartigen Kulturen.

EP 0 076 470 A1

Croydon Printing Company Ltd

## Herbizide Mittel

Gegenstand der vorliegenden Erfindung sind herbizide Mittel, die gekennzeichnet sind durch einen Gehalt an

(A) einer Verbindung der Formel I,

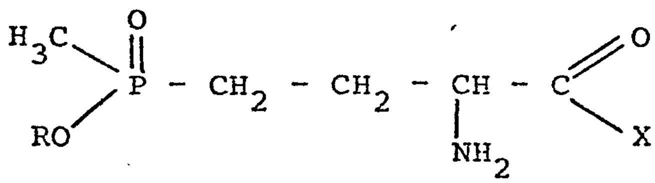

(I)

worin

R = Wasserstoff, $NH_4$, Na, K oder 1/2 Ca, und

X = OH oder $-NH-CH(CH_3)-CONH-CH(CH_3)-COOH$ bedeuten, in Kombination mit

(B) einer Verbindung der Formel II,

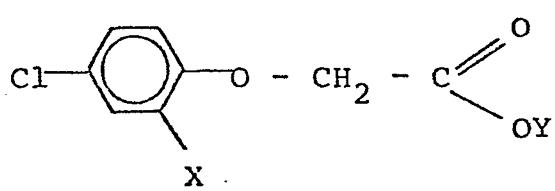

(II)

worin

X = Cl oder $CH_3$, und

Y = Wasserstoff, Alkali, $NH_4$, $NH_3-CH_3$, $NH_2(C_2H_5)_2$, $NH_2(CH_3)_2$, $NH_3-C_2H_4 \cdot OH$, $NH_2(C_2H_4 \cdot OH)_2$, $NH(C_2H_4 \cdot OH)_3$ oder $(C_1-C_4)$-Alkyl bedeutet,

und

(C) der Verbindung der Formel III

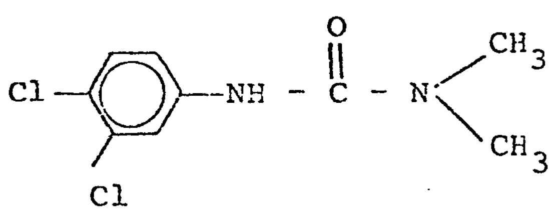

(III)

oder der Verbindung der Formel IV

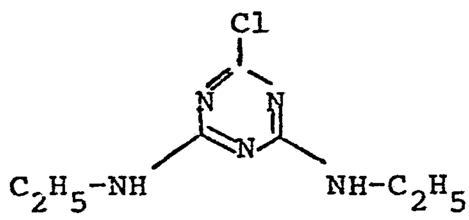

(IV)

Die Verbindung der Formel I mit R = Wasserstoff und X = -OH ist auch unter dem Namen Phosphinotricin bekannt geworden.

Besonders bevorzugt ist die Verbindung der Formel I mit R = $NH_4$ und X = -OH (= Verbindung Ia, das Ammoniumsalz des Phosphinotricins). Sie ist z.B. in der DE-OS 27 17 440 beschrieben und kann sowohl als Racemat, als auch als optisch aktive L-Form eingesetzt werden. Weiterhin bevorzugt sind Verbindungen der Formel I mit X = $-NH-CH(CH_3)-CONH-CH(CH_3)-COOH$, wie sie z.B. in der DE-OS 28 48 224 beschrieben sind.

Verbindungen der Formel II, bei denen X entweder Chlor (= Verbindung IIa, common name: 2,4-D) oder Methyl (= Verbindung IIb, common name: MCPA) bedeutet, sind bereits als Wachstumsregulatoren bekannt. Beide sind z.B. beschrieben in "Pesticide Manual", herausgegeben von C.R. Worthing (1979), Seite 145 (IIa) bzw. Seite 326 (IIb). Sie werden bevorzugt als Alkali-(Natrium-, Kalium-) oder Magnesium- oder Aminsalze, z. T. auch als Ester (Y = $(C_1-C_4)$-Alkyl), z.B. als Isopropyl- oder Isobutylester verwendet.

Die Verbindungen der Formel III (common name: Diuron) und der Formel IV (common name: Simazine) sind bereits als Herbizide bekannt. Beide sind z.B. beschrieben in "Pesticide Manual", herausgegeben von C.R. Worthing (1979), Seite 224 (III) bzw. Seite 474 (IV).

Verbindungen der Formel I bekämpfen ein- und mehrjährige Unkräuter verschiedener botanischer Familien in Dosierungen von vorzugsweise 0,5 bis 1,5 kg/ha Wirkstoff, wobei die Nachwirkung bei mehrjährigen Arten teilweise beträchtlich sein kann. Bei mehrjährigen Gramineen ist aber in manchen Fällen die Wirkung nicht immer befriedigend. Man erzielt zwar einen relativ schnellen, kurzzzeitigen "Abbrenneffekt" auf den grünen Pflanzenteilen (Stengel und Blätter), jedoch häufig keine länger anhaltende Dauerwirkung.

Mit Verbindungen der Formel II können zahlreiche breitblättrige Unkrautarten bekämpft werden, und zwar sowohl ein- als auch mehrjährige. Häufig werden sie in Getreidekulturen in Dosierungen unter 1 kg/ha Wirkstoff eingesetzt. Ein anderer Einsatzschwerpunkt liegt in der Anwendung in mehrjährigen Kulturen, vor allem baum- oder strauchartigen Kulturen wie Reben, Obst- oder Citrus-Bäumen, verschiedenen tropischen Plantagenkulturen wie Kautschuk, Kaffee, Kakao und ähnliches, oder in staudenartigen Kulturen wie Zuckerrohr oder Banane. Die Dosierungen liegen hier bei alleiniger Anwendung meist über 1 kg/ha, z. T. über 2 kg/ha Wirkstoff. In diesen Kulturen werden wegen der geringeren Flüchtigkeit und der dadurch bedingten geringeren Gefahr einer möglichen Schädigung der Kulturpflanzen bevorzugt die Salze der Verbindungen der Formel II verwendet, die entsprechenden Ester dagegen nur in geringem Maße. Die genannten Wirkstoffe der Formel II werden über das Blatt aufgenommen und in der Pflanze sowohl in Richtung Wurzel, als auch in Richtung Triebspitze transportiert.

Die Verbindungen der Formeln III und IV werden ebenfalls in den vorstehend genannten Dauerkulturen eingesetzt, und zwar, je nach Kultur, in einem weiten Dosierungsbereich, der zwischen 0,5 und 5 kg/ha Wirkstoff liegen kann. Sie haben zwar eine gewisse Wirkung auf die vorhandene Unkrautflora, verhindern aber vor allem durch ihre Dauerwirkung im Boden den Neuauflauf von Unkräutern aus Samen, während sie auf den Wiederaustrieb aus überlebenden unterirdischen Pflanzenteilen (Wurzeln, Knollen, Rhizomen) nur eine geringe Wirkung haben.

Es ist weiterhin bekannt geworden, daß Kombinationen von Verbindungen der Formel I mit Verbindungen der Formeln III oder IV, sowie andererseits Kombinationen von Verbindungen der Formel I mit Verbindungen der Formel II synergistische herbizide Wirkungen aufweisen (vgl. z.B. DE-OS 28 39 087 und DE-OS 28 56 260).

Es wurde nun gefunden, daß sowohl Kombinationen der bekannten Mischungen aus Verbindungen der Formeln I und II mit Verbindungen der Formeln III oder IV, als auch Kombinationen von Verbindungen der Formel II mit den bekannten Mischungen aus Verbindungen der Formeln I und III oder I und IV überraschende zusätzliche synergistische herbizide Wirkungen zeigen.

Dieser überraschende zusätzliche Synergismus erfindungsgemäßer Dreierkombinationen läßt sich u.a. auch durch Anwendung der im Zusammenhang mit dem Auffinden von Synergismus üblichen Berechnungsformeln nach S.R. Colby bestätigen, indem man die experimentell gefundene Wirkung (in % Schädigung) einer Dreierkombination mit der errechenbaren Wirkungsaddition der Einzelwirkungen der Komponenten vergleicht. Ist die letztere geringer als die erstere, so ist Synergismus angezeigt.

Die Gewichtsverhältnisse der Komponenten (I) : (II) : (III) bzw. (IV) in den erfindungsgemäßen Kombinationen können innerhalb weiter Grenzen schwanken, bevorzugt liegen sie jedoch im Bereich von 1 : (1 bis 4) : (0,5 bis 6),
insbesondere im Bereich von
1 : (1,5 bis 2,5) : (1 bis 4).

Die erfindungsgemäßen Dreierkombinationen lassen sich besonders vorteilhaft verwenden, um ein vorhandenes breites Unkrautspektrum aus ein- und mehrjährigen Arten nachhaltig zu bekämpfen und gleichzeitig die behandelten Flächen längere Zeit von später auflaufendem Unkraut freizuhalten (Langzeit-Dauerwirkung). Je nach Dosierung und je nach Anteil der einzelnen Komponenten können sie in baum- oder strauchartigen Kulturen der gemäßigten und der tropischen Zonen eingesetzt werden, z.B. in Reben, Citrus, Apfel, Birne, Pflaume, Kirsche, Beerensträuchern, Kautschuk, Ölpalme, Kaffee oder Kakao; außerdem ist ein Einsatz auch möglich in staudenartigen Kulturen wie Banane oder Zuckerrohr.

Die erfindungsgemäßen Kombinationen können entweder als Tankmischungen, bei denen die einzeln formulierten Wirkstoffkomponenten erst unmittelbar vor der Applikation miteinander vermischt werden, oder als Fertigmischungen zur Anwendung gebracht werden. Als Fertigmischungen können sie z.B. in Form von emulgierbaren Konzentraten oder bevorzugt z.B. in Form von benetzbaren Pulvern formuliert sein und enthalten dann ggfs. die üblichen Formulierungshilfsmittel, wie z.B. Netz-, Haft-, Emulgier- oder Dispergiermittel, feste Inertstoffe, Mahlhilfsmittel und Lösungsmittel.

Bei den erfindungsgemäßen Wirkstoffkombinationen können deren Konzentrationen in den anzuwendenden Formulierungen verschieden sein. Sie betragen im allgemeinen 2 bis 95 Gew.-%, vorzugsweise 5 bis 80 Gew.-%.

Gegenstand der Erfindung sind daher auch herbizide Mittel mit einem Gehalt von 2 bis 95 Gew.-%, vorzugsweise 5 bis 80 Gew.-% an einer Wirkstoffkombination aus Verbindungen der Formeln I + II + III bzw. IV sowie üblichen Formulierungshilfsmitteln.

In den benetzbaren Pulvern variiert die Gesamt-Wirkstoffkonzentration (I + II + III bzw. IV) im Bereich von etwa 10 bis 80 Gew.-%, der Rest zu 100 Gew.-% besteht aus üblichen Formulierungszusätzen.

Zur Anwendung werden die erfindungsgemäßen Wirkstoffkonzentrate ggfs. in üblicher Weise verdünnt, z.B. benetzbare Pulver und Emulsionskonzentrate mittels Wasser. Mit den äußeren Bedingungen, wie Temperatur, Feuchtigkeit u.a. variiert auch die erforderliche Aufwandmenge an den erfindungsgemäßen Mitteln. Sie kann sich innerhalb weiter Grenzen bewegen und beträgt im allgemeinen zwischen 0,5 und 20 kg/ha Wirkstoff-Dreierkombination, vorzugsweise 1 bis 10 kg/ha.

A. Formulierungsbeispiele

Benetzbare Pulver (Spritzpulver) mit Gehalten an erfindungsgemäßen Wirkstoff-Dreierkombinaticnen werden bevorzugt in der Weise hergestellt, daß man die in Wasser schwerlöslichen Wirkstoffe, wie z.B. die Verbindung III (= Diuron) in fein vermahlener und bereits als Spritzpulver formulierter Form mit den wasserlöslichen Wirkstoffen, wie z.B. der Verbindung Ia (= Ammonium-Phosphinotricin) und dem Natrium- oder Dimethylaminsalz der Verbindung IIb (= MCPA) oder IIa (= 2,4-D) sowie den benötigten Netz- und Dispergiermitteln unter Feuchtigkeitsausschluß intensiv mischt, zweckmäßig in einer Hammermühle. Hierdurch werden die wasserlöslichen Wirkstoffe mit den in Wasser schwerlöslichen Wirkstoffen und den oberflächenaktiven Verbindungen sehr intensiv homogenisiert, so daß optimale Benetzbarkeiten und Suspendierbarkeiten bei den resultierenden Spritzpulvern erzielt werden können.

Zur Erhöhung der Fließfähigkeit der Spritzpulver können diese als Trägerstoffe vorteilhaft z.B. feine synthetische Kieselsäure, Kieselgur, Clay oder Bentonitpulver enthalten. Als Dispergiermittel eignen sich z.B. dinaphthylmethandisulfonsaures Natrium, Ligninsulfonate, Kondensationsprodukte von Alkylnaphthalinsulfonsäuren mit Kresolen, Natriumsulfit und Formaldehyd, Oleoyl-N-methyltauride, Polyvinylalkohole oder Polyvinylpyrrolidone, als Netzmittel dibutylnaphthalinsulfonsaures Natrium, alkylnaphthalinsulfonsaures Natrium, Alkylsulfate, vorzugsweise z.B. Alkali- und Ammoniumsalze des Schwefelsäurehalbesters von aliphatischen $(C_{12}-C_{16})$-Alkoholpolyglykoläthern mit 2-6 Äthylenoxideinheiten (=Netzmittel FES).

Flüssige oder niedrig schmelzende oberflächenaktive Substanzen werden zweckmäßigerweise zunächst auf adsorptionsfähiger Kieselsäure zu pulverförmigen trockenen Konzentraten absorbiert und dem Spritzpulver in Pulverform zugemischt. Als Entschäumer eignen sich, falls erforderlich, Natrium- oder Kaliumsalze von Fettsäuren sowie Silicone.

Beispiel 1

Herstellung eines Spritzpulvers mit 53,2 Gew.-% Wirkstoff-Dreierkombination, enthaltend 10 Gew.-% Verbindung Ia + 16,6 Gew.-% Verbindung IIb-Natrium + 26,6 Gew.-% Verbindung III.

1.1 Formulierung eines Spritzpulvers mit 80 Gew.-% Verbindung III:

Eine Mischung aus
80,0 Gew.-% Verbindung III
12,0 Gew.-% synthetischer Kieselsäure

6,0 Gew.-% dinaphthylmethandisulfonsaurem Natrium
1,8 Gew.-% alkylnaphthalinsulfonsaurem Natrium
0,2 Gew.-% Oleoyl-N-methyltaurid-Natrium

wird auf einer hochtourigen Stiftmühle zu einem feinen Pulver mit Partikelgrößen von weniger als 44 Mikron gemahlen.

1.2 <u>Formulierung eines Netzmittel-Adsorptionskonzentrates</u> aus pastenförmigem, wasserhaltigem ($C_{12}$-$C_{16}$)-Fettalkoholpolyglykoläthersulfat-Natrium (= FES) und adsorptionsfähiger synthetischer Kieselsäure:

In einem Intensivmischer, der eine Rührwerkswelle mit Umwälzschaufeln enthält, werden bei einer Rührwerksdrehzahl von ca. 150 U/Min. 60 Gew.-Teile einer 70 Gew.-%igen FES-Paste und 40 Gew.-Teile kolloidale synthetische Kieselsäure intensiv vermischt, wobei ein pulverförmiges Adsorbat erhalten wird, das 42 Gew.-% FES-Aktivsubstanz enthält.

1.3 <u>Herstellung des Spritzpulvers mit 53,2 Gew.-% Wirkstoff-Dreierkombination:</u>

In einem Intensivmischer werden

33,25 Gew.-Teile Verbindung III-Spritzpulver (80 %ig), hergestellt nach 1.1, mit 26,6 Gew.-Teilen Verbindung III-Anteil

10,00 Gew.-Teile Verbindung Ia

16,60 Gew.-Teile Verbindung IIb-Natriumsalz

23,80 Gew.-Teile Netzmittel FES-Adsorbat, hergestellt nach 1.2, mit 10 Gew.-Teilen FES-Anteil

5,15 Gew.-Teile dinaphthylmethandisulfonsaures Natrium

2,00 Gew.-Teile dibutylnaphthalinsulfonsaures Natrium

1,00 Gew.-Teile Seifenflocken

8,20 Gew.-Teile synthetische Kieselsäure

unter Feuchtigkeitsausschluß gemischt und anschließend auf einer Schlagkreuzmühle zu einem feinpulverigen Produkt gemahlen.

<u>Beispiel 2</u>

<u>Herstellung eines Spritzpulvers mit 40 Gew.-% Wirkstoff-Dreierkombination, enthaltend 10 Gew.-% Verbindung Ia + 20 Gew.-% Verbindung IIa-Natrium + 10 Gew.-% Verbindung III.</u>

Analog dem Beispiel 1 werden in einem Intensivmischer

12,5 Gew.-Teile Verbindung III-Spritzpulver (80 %ig), hergestellt nach Beisp. 1.1., mit 10 Gew.-Teilen Verbdg. III-Anteil

10,0 Gew.-Teile Verbindung Ia

20,0 Gew.-Teile Verbindung IIa-Natriumsalz

23,8 Gew.-Teile Netzmittel FES-Adsorbat, hergest. nach Beisp. 1.2., mit 10 Gew.-Teilen FES-Anteil

5,7 Gew.-Teile dinaphthylmethandisulfonsaures Natrium

3,0 Gew.-Teile dibutylnaphthalinsulfonsaures Natrium

2,0 Gew.-Teile Seifenflocken

13,0 Gew.-Teile synthetische Kieselsäure

unter Feuchtigkeitsausschluß gemischt und anschließend auf einer Schlagkreuzmühle zu einem feinpulverigen Produkt gemahlen.

## B. Biologische Beispiele

In den folgenden biologischen Beispielen I bis IV wird bei den geprüften Wirkstoff-Kombinationen unterschieden zwischen dem errechneten und dem gefundenen Wirkungsgrad auf die genannten Unkräuter. Die Errechnung des Wirkungsgrades erfolgt nach den Formeln von S.R. Colby: Calculating synergistic and antagonistic responses of herbicide combinations (Weeds 15, p. 20-22, 1967) aus den Wirkungen der Kombinationsbestandteile bei deren Einzelanwendungen. Die Formel (1) für die Kombination von 2 Wirkstoffen lautet:

$$E = X + Y - \frac{X \cdot Y}{100} \qquad (1)$$

wobei

X = % Schädigung durch Herbizid A bei x kg/ha Aufwandmenge,

Y = % Schädigung durch Herbizid B bei y kg/ha Aufwandmenge,

E = die erwartete Schädigung durch die Herbizide A + B bei x + y kg/ha Aufwandmenge

bedeutet.

Für die Kombination von 3 Wirkstoffen ist für die Errechnung des Wirkungsgrades in derselben Druckschrift die Formel (2) angegeben:

$$E = X + Y + Z - \frac{(XY + XZ + YZ)}{100} + \frac{XYZ}{10000} \qquad (2)$$

wobei

Z = % Schädigung durch Herbizid C bei z kg/ha Aufwandmenge bedeutet und

X und Y dieselben Bedeutungen wie in Formel (1) haben.

Ist die tatsächliche, d.h. die experimentell ermittelte Schädigung größer als berechnet, so ist die Wirkung der Kombination mehr als additiv, d.h. es liegt ein synergistischer Effekt vor. Dieser Nachweis wird in den folgenden biologischen Beispielen für die erfindungsgemäßen Kombinationen erbracht, wobei bei den erfindungsgemäßen Kombinationsbehandlungen in Klammern jeweils auch die aus obigen Formeln errechneten Wirkungen angegeben sind, während dahinter die tatsächlich erzielte Wirkung gegen die jeweils genannten Unkräuter aufgeführt ist.

In den biologischen Beispielen I bis IV wird nicht nur die Wirkung der Kombination I + II + III bzw. IV mit der der 3 Einzelwirkstoffe verglichen, sondern auch mit der Wirkung der bereits bekannten Kombinationen I + II und I + III bzw. IV. Es handelt sich bei diesen Anwendungsbeispielen um Freilandversuche, die unter verschiedenen klimatischen Bedingungen durchgeführt wurden. Die Ergebnisse sind in den Tabellen I bis IV zusammengefaßt wiedergegeben. Alle Versuche wurden in Parzellen von 10 bis 20 $m^2$ Fläche durchgeführt.

<u>Beispiel I</u>

In einem Versuch unter tropischen Bedingungen an dem Unkraut Mikania cordata in einer Kautschukkultur wurden die Einzelverbindungen Ia, IIa und III nebeneinander geprüft sowie die bekannte Kombination Ia + III. Erfindungsgemäße Kombinationen aus diesen drei Wirkstoffen führten sowohl im Vergleich zu den Einzelprodukten, wie im Vergleich zu der bekannten Kombination zu einer erheblichen Wirkungssteigerung, die über das zu erwartende Maß deutlich hinausgeht. Die Wirkung der Dreierkombinationen ist demnach als synergistisch zu bezeichen. Das Ergebnis ist in der nachstehenden Tabelle I zusammengefaßt wiedergegeben.

Tabelle I

Bekämpfung von Mikania cordata in einer Kautschukkultur.

| Behandlung mit Wirkstoff | Wirkstoffdosis kg/ha | Wirkung (% Schädigung) auf Mikania cordata (Feldversuch) 5 Wochen nach der Behandlung errechnet | gefunden | |
|---|---|---|---|---|
| a) Einzelwirkstoffe | | | | |
| Verbindung Ia | 0,4 | | 50 | |
| Verbindung IIa | 0,8 | | 60 | |
| Verbindung IIa | 0,4 | | 40 | |
| Verbindung III | 0,4 | | 10 | |
| b) bekannte Kombination | | | | |
| Verbindungen Ia + III | 0,4 + 0,4 | | 70 | |
| c) erfindungsgemäße Kombinationen | | | | |
| Verbindungen Ia+IIa+III | 0,4+0,4+0,4 | (73*/82**) | 90 | 1:1:1 |
| Verbindungen Ia+IIa+III | 0,4+0,8+0,4 | (82*/88**) | 96 | 1:2:1 |

* errechnet aus der Wirkung der Einzelprodukte

** errechnet aus der Wirkung der bekannten Kombination und IIa

Beispiel II

Aus einer Versuchsserie in Weinreben- und Apfelkulturen, die nach einem einheitlichen Versuchsplan angelegt wurde, sind in Tabelle II die Ergebnisse mit drei schwer bekämpfbaren Unkräutern aufgeführt; es sind vor allem die Verbindung IIb mit den bekannten Kombinationen Ia + III und Ia + IV nebeneinander geprüft worden sowie die erfindungsgemäßen Kombinationen Ia + IIb + III und Ia + IIb + IV. Die genannten Dreierkombinationen waren in ihrer herbiziden Wirkung deutlich besser als nach den Berechnungen der Colby-Formel zu erwarten gewesen wäre, wobei die bekannten Kombinationen jeweils als einheitliche Behandlungen gewertet wurden, was eine synergistische Wirkungssteigerung bedeutet. Das Ergebnis ist in der nachstehenden Tabelle II zusammengefaßt wiedergegeben.

Tabelle II

Bekämpfung von schwierig bekämpfbaren Unkräutern in Weinreben- bzw. Apfelkulturen

| Behandlung mit Wirkstoff | Wirkstoffdosis kg/ha | Wirkung (% Schädigung) auf die nachstehenden Unkräuter (Feldversuch) | | |
|---|---|---|---|---|
| | | Plantago lanceolata in Apfelkultur (4 Wochen nach der Behandlung) | Cirsium arvense in Weinrebenkultur (6 Wochen nach der Behandlung) | Convolvulus arvensis in Weinrebenkultur (6 Wochen nach der Behandlung) |
| Verbindung IIb | 1,0 | 50 | 75 | 80 |
| Verbindungen Ia + III | 0,5 + 2,0 | 60 | 30 | 50 |
| Verbindungen Ia + IV | 0,5 + 2,0 | 55 | 30 | 50 |
| erfindungsgemäße Kombinationen | | | | |
| Verbindungen Ia + IIb + III | 0,5 + 1,0 + 2,0 | (80) 98 | (77,5) 92 | (90) 100 |
| Verbindungen Ia + IIb + IV | 0,5 + 1,0 + 2,0 | (77,5) 98 | (77,5) 90 | (90) 100 |

1 : 2 : 4

Beispiel III

In einem weiteren Versuch an dem Unkraut Rumex acetosa in einer Kirschenkultur wurde die bekannte Kombination Ia + IIb im Gemisch mit der Verbindung III geprüft. Es zeigte sich bei der erfindungsgemäßen Dreierkombination eine Wirkungssteigerung, die das zu erwartende Ausmaß deutlich übertrifft, d.h., es liegt eine synergistische Wirkungssteigerung vor. Das Ergebnis ist in der nachstehenden Tabelle III zusammengefaßt wiedergegeben.

Tabelle III

Bekämpfung von Rumex acetosa in einer Kirschenkultur

| Behandlung mit Wirkstoff | Wirkstoffdosis kg/ha | Wirkung (% Schädigung) auf Rumex acetosa (Feldversuch) 6 Wochen nach der Behandlg. | |
|---|---|---|---|
| | | errechnet | gefunden |
| Verbindungen Ia+IIb | 0,5+1,25 | | 80 |
| Verbindung III | 2,0 | | 20 |
| Verbindungen Ia+IIb+III | 0,5+1,25+2,0 | (84) | 95 |

1 : 2,5 : 4

Beispiel IV

In einer Jungpflanzung von Ölpalmen, in der die Baumreihen sehr stark mit Mikania cordata, Pueraria sp. und verschiedenen Gräsern, vor allem Paspalum conjugatum befallen waren, wurden die Präparate Ia, IIa und III allein, außerdem in den bekannten Kombinationen Ia + IIa und Ia + III sowie in erfindungsgemäßen Dreierkombinationen geprüft. Nach 5 und 10 Wochen wurden die Unkrautwirkung ebenso wie die Kulturpflanzenschäden bonitiert. Bei der Wirkung auf

Paspalum zeigte sich, daß die Verbindung Ia mit 0,4 kg/ha Wirkstoff bereits völlig ausreichte, um eine 100 %ige Wirkung auf die vorhandenen Unkrautpflanzen zu erzielen. Nach 10 Wochen waren allerdings zahlreiche Paspalum-Planzen aus im Boden vorhandenen Samen neu aufgelaufen, da die Verbindung Ia keine Wirkung über den Boden besitzt. Andererseits waren in Parzellen, die mit Verbindung III behandelt worden waren, die aus Samen neuauflaufenden Pflanzen vernichtet worden, während die bereits vorhandenen Unkrautpflanzen nur wenig geschädigt wurden. Dagegen waren die mit erfindungsgemäßen Kombinationen behandelten Parzellen ebenfalls frei von alten, d.h. zum Zeitpunkt der Applikation vorhandenen, wie auch von frisch gekeimten Pflanzen. Alle Behandlungen mit den Verbindungen Ia oder IIa hatten bei Pueraria und Mikania eine z. T. sehr gute Anfangswirkung, die Nachwirkung 10 Wochen nach der Behandlung war aber völlig unbefriedigend. Auch die bekannten Kombinationen waren zu diesem Zeitpunkt nicht mehr ausreichend wirksam. Mit den erfindungsgemäßen Dreierkombinationen jedoch zeigte sich, daß vor allem die Nachwirkung besonders gut war, ein Effekt, der so deutlich nicht zu erwarten war und daher als synergistisch zu bezeichnen ist. Eine gute Nachwirkung war zwar auch in der bekannten Kombination Ia + IIa mit 0,4 + 1,2 kg/ha zu erzielen; hierbei zeigten sich allerdings an jungen Bäumen, die an der Rinde oder an Teilen der Palmwedel mit der Spritzbrühe in Kontakt geraten waren, deutliche Wuchsstoffschäden (Blattverdrehungen). In der erfindungsgemäßen Kombination dagegen, in der der Anteil der Substanz IIa deutlich reduziert war, konnten diese Blattschäden nicht mehr beobachtet werden. Die Dosierung der Kombination ließ sich sogar um ein Viertel reduzieren, um die Gefahr der Blattschäden weiter herabzumindern, ohne daß die Unkrautwirkung, insbesondere die Nachwirkung 10 Wochen nach Behandlung in erheblichem Maße nachgelassen hätte (vgl. Tabelle IV, letzte Zeile). Man

kann durch erfindungsgemäße Dreierkombinationen somit erreichen, daß die Herbizidanwendung sicherer wird und daß man gleichzeitig eine deutlich gesteigerte und dadurch ausreichend lange Nachwirkung erzielt; unter praktischen Bedingungen hat dies zur Folge, daß der Zeitpunkt für die nächste Herbizidbehandlung hinausgeschoben werden kann; dadurch werden u.a. auch Arbeits- und Präparate-Kosten gespart. Das Ergebnis ist in der nachfolgenden Tabelle IV zusammengefaßt wiedergegeben.

Tabelle IV

Unkrautbekämpfung in einer Ölpalmen-Jungpflanzenkultur

| Behandlung mit Wirkstoff | Wirkstoffdosis kg/ha | Wirkung (% Schädigung) auf die nachstehenden Unkräuter (Feldversuch) nach 5 Wochen | | nach 10 Wochen | | Blattschäden an der Ölpalmen-Kultur nach 5 Wochen |
|---|---|---|---|---|---|---|
| | | Pueraria sp. | Mikania sp. | Pueraria sp. | Mikania sp. | |
| a) Einzel-Verbindungen | | | | | | |
| Verbindung Ia | 0,4 | 85 | 80 | 40 | 50 | – |
| Verbindung IIa | 1,2 | 95 | 95 | 60 | 70 | + |
| Verbindung IIa | 0,6 | 90 | 80 | 30 | 40 | – |
| Verbindung III | 0,4 | 10 | 0 | 0 | 0 | – |
| b) bekannte Kombinationen | | | | | | |
| Verbindungen Ia + IIa | 0,4+1,2 | 99 | 99 | 85 | 80 | + |
| Verbindungen Ia + IIa | 0,4+0,6 | 98 | 95 | 70 | 65 | – |
| Verbindungen Ia + III | 0,4+0,4 | 90 | 90 | 45 | 60 | – |
| c) erfindungsgemäße Kombinationen | | | | | | |
| Verbindungen Ia+IIa+III | 0,4+0,6+0,4 | 100 (98) | 100 (96) | 85 (58) | 95 (79) | – 1:1,5:1 |
| Verbindungen Ia+IIa+III | 0,3+0,45+0,3 | 99 | 96 | 80 | 90 | – |

PATENTANSPRÜCHE:

1. Herbizide Mittel, gekennzeichnet durch einen Gehalt an

(A) einer Verbindung der Formel I,

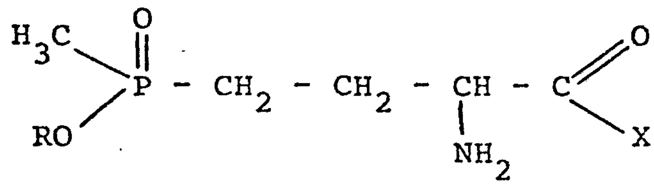
(I)

worin

R = Wasserstoff, $NH_4$, Na, K oder 1/2 Ca, und
X = OH oder $-NH-CH(CH_3)-CONH-CH(CH_3)-COOH$ bedeuten,
in Kombination mit

(B) einer Verbindung der Formel II,

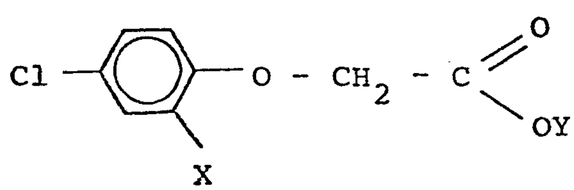
(II)

worin

X = Cl oder $CH_3$, und
Y = Wasserstoff, Alkali, $NH_4$, $NH_3-CH_3$, $NH_2(C_2H_5)_2$, $NH_2(CH_3)_2$, $NH_3-C_2H_4 \cdot OH$, $NH_2(C_2H_4 \cdot OH)_2$, $NH(C_2H_4 \cdot OH)_3$ oder $(C_1-C_4)$-Alkyl bedeutet,

und

(C) der Verbindung der Formel III

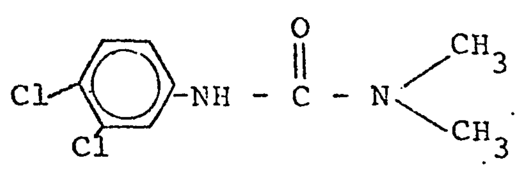
(III)

oder der Verbindung der Formel IV

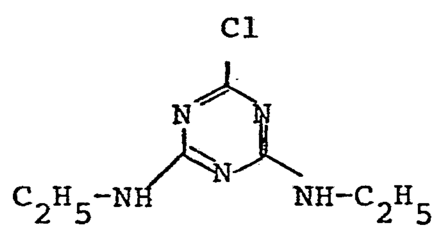

(IV)

2. Herbizide Mittel gemäß Anspruch 1, dadurch gekennzeichnet, daß das Mischungsverhältnis der Komponenten der Formeln I : II : III bzw. IV = 1 : (1 bis 4) : (0,5 bis 6) beträgt.

3. Herbizide Mittel gemäß Anspruch 1, dadurch gekennzeichnet, daß das Mischungsverhältnis der Komponenten der Formeln I : II : III bzw. IV = 1 : (1,5 bis 2,5) : (1 bis 4) beträgt.

4. Herbizide Mittel, gekennzeichnet durch einen Gehalt von 2 bis 95 Gew.-% an einer Wirkstoffkombination gemäß Ansprüchen 1 bis 3, wobei der Rest zu 100 Gew.-% aus üblichen Formulierungshilfsmitteln besteht.

5. Verwendung der Mittel gemäß Ansprüchen 1 bis 4 zur Unkrautbekämpfung, insbesondere in baum-, strauch- oder staudenartigen Dauerkulturen.

6. Verfahren zur Bekämpfung von Unkräutern, dadurch gekennzeichnet, daß man auf die von ihnen befallenen Flächen Wirkstoffkombinationen gemäß Ansprüchen 1 bis 4 in Mengen von 0,5 bis 20 kg Wirkstoffkombination pro Hektar aufbringt.

Europäisches Patentamt

# EUROPÄISCHER RECHERCHENBERICHT

0076470

Nummer der Anmeldung

EP 82 10 9039

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | EP-A-0 009 620 (HOECHST)<br>* Seite 5, Zeilen 17-21; Ansprüche * | 1-6 | A 01 N 57/20 //<br>(A 01 N 57/20<br>A 01 N 47/30<br>A 01 N 43/70<br>A 01 N 57/20<br>A 01 N 47/30<br>A 01 N 39/04 ) |
| D,Y | DE-A-2 856 260 (MEIJI SEIKA KAISHA)<br>* Seite 5, Zeilen 12-26; Seite 6, Zeile 26 - Seite 7, Zeile 8; Seite 12, Zeilen 7-21; Seite 17, Zeilen 20-27; Ansprüche * | 1-6 | |
| D,Y | DE-A-2 848 224 (MEIJI SEIKA KAISHA)<br>* Seite 16, Zeile 29 - Seite 17, Zeile 11; Seite 22, Zeile 27 - Seite 23, Zeile 13; Ansprüche * | 1-6 | |
| | ----- | | **RECHERCHIERTE SACHGEBIETE (Int. Cl. 3)**<br>A 01 N |

Der vorliegende Recherchenbericht wurde für alle Patentansprüche erstellt.

| Recherchenort | Abschlußdatum der Recherche | Prüfer |
|---|---|---|
| DEN HAAG | 07-01-1983 | FLETCHER A.S. |

KATEGORIE DER GENANNTEN DOKUMENTEN
- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus andern Gründen angeführtes Dokument
- & : Mitglied der gleichen Patentfamilie, übereinstimmendes Dokument